# FASCICULE DE BREVET EUROPEEN

(11) **EP 3 104 044 B1**
(45) Date de publication et mention de la délivrance du brevet: **28.08.2019**
(21) Numéro de dépôt: 16171130.4
(22) Date de dépôt: 24.05.2016
(51) Int. Cl.: F16H 57/04, F16N 7/40, B64D 35/00

(54) **BOITE DE TRANSMISSION DE PUISSANCE ET AERONEF**
LEISTUNGSÜBERTRAGUNGSGETRIEBE UND LUFTFAHRZEUG
A POWER TRANSMISSION GEARBOX AND AN AIRCRAFT

(30) Priorité: 11.06.2015 FR 1501213
(43) Date de publication de la demande: 14.12.2016
(73) Titulaire: Airbus Helicopters, 13725 Marignane Cedex (FR)
(72) Inventeur: LOUIS, Charles, 13090 Aix En Provence (FR)
(74) Mandataire: GPI & Associés

(56) Documents cités:
- EP-A1- 0 443 901
- WO-A1-2011/059450
- FR-A1- 2 826 094
- US-A- 4 976 335
- US-A- 5 046 306
- US-A1- 2007 261 922
- US-A1- 2014 090 930

## Description

La présente invention concerne une boîte de transmission de puissance, ainsi qu'un aéronef muni d'une telle boîte de transmission de puissance.

En particulier, un aéronef de type giravion comporte un rotor participant au moins partiellement à la sustentation de cet aéronef. Un giravion de type hélicoptère peut ainsi comporter un rotor dit « rotor principal » pour assurer sa sustentation et sa propulsion.

Pour mettre en rotation un tel rotor, un giravion est muni d'une installation motrice comportant au moins un moteur.

En outre, une boîte de transmission de puissance peut être interposée entre les moteurs et un rotor pour transmettre au rotor la puissance développée par les moteurs. La boîte de transmission de puissance a notamment pour fonction d'entraîner le rotor à une vitesse de rotation faible comparée à la vitesse de rotation élevée des moteurs. A titre illustratif, un moteur de type turbomoteur possède un arbre de travail effectuant une rotation à une vitesse de l'ordre de plusieurs dizaines de milliers de tours par minute, le rotor effectuant une rotation à une vitesse de l'ordre de 300 tours seulement par minute.

Ainsi, un hélicoptère est muni d'au moins un moteur mettant en mouvement au moins un rotor principal par une boîte de transmission de puissance principale.

Une boîte de transmission de puissance connue présente un système d'entraînement mécanique d'entrée par moteur. Chaque système d'entraînement mécanique d'entrée est donc mis en mouvement par un moteur.

De plus, les systèmes d'entraînement mécaniques d'entrée entraînent conjointement une roue dénommée parfois « grande roue ».

La grande roue met en mouvement au moins un étage de réduction de vitesse pour entraîner en rotation un rotor via des engrenages.

Les ensembles d'engrenages présents dans les boîtes de transmission de puissance principales des hélicoptères nécessitent une lubrification permanente, éventuellement de façon dégradée suite à certaines défaillances.

Dès lors, une boîte de transmission de puissance comporte un système de lubrification principal. Un tel système de lubrification principal comporte une pompe de lubrification. Par exemple, la grande roue peut être solidaire en rotation d'une roue mettant en mouvement la pompe de lubrification.

La pompe de lubrification transfère alors un liquide de lubrification d'un fond de la boîte de transmission de puissance vers des moyens de projection principaux. Les moyens de projection principaux peuvent comporter des gicleurs par exemple.

Le liquide de lubrification prélevé dans le fond de la boîte de transmission de puissance est usuellement chaud. Par suite, un système de lubrification peut comporter un échangeur thermique agencé en aval des moyens de projection principaux pour refroidir ce liquide de lubrification.

Une pompe de lubrification de secours est parfois agencée dans le fond de la boîte de transmission de puissance pour alimenter les moyens de projection principaux, éventuellement sans solliciter l'échangeur thermique. Cette pompe de lubrification de secours fonctionne en permanence ou est mise automatiquement en service suite à une défaillance de la pompe du système de lubrification principal par exemple.

En cas de fuite du liquide de refroidissement, la réglementation en vigueur impose en outre d'assurer une tenue mécanique de la boîte de transmission de puissance pendant une durée minimale pour permettre à un équipage de tenter de poser l'aéronef dans les meilleurs délais.

Certaines solutions techniques actuelles consistent alors à prévoir un système additionnel de lubrification pour répondre à cette exigence. Un tel système additionnel peut comprendre un réservoir additionnel de liquide de lubrification et une pompe additionnelle permettant de faire circuler le liquide de lubrification dans des tuyaux munis de moyens de projection dédiés à ce système additionnel.

Un tel système additionnel s'avère efficace mais présente de multiples équipements additionnels, à savoir notamment une pompe ainsi qu'un réservoir et des moyens de projection. Ce système additionnel peut s'avérer lourd et difficile à agencer dans un environnement encombré par de multiples organes.

Dans ce contexte, le document EP 0.540.406 décrit un système additionnel de refroidissement de ce type.

Ce système additionnel comporte un orifice d'entrée et un orifice de sortie qui sont ménagés dans un carter d'une boîte de transmission de puissance. L'orifice d'entrée et l'orifice de sortie sont ouverts sous l'action d'un dispositif de commande à une valeur prédéterminée d'un paramètre représentatif de la perte d'huile de lubrification.

Une conduite d'air débouche sur l'orifice d'entrée pour acheminer de l'air. Cette conduite d'air peut déboucher sur une prise d'air de l'aéronef ou encore peut déboucher sur un compresseur d'un moteur.

En outre, une réserve de lubrifiant externe à la boîte de transmission de puissance est agencée pour aboutir dans la conduite d'air. La réserve de lubrifiant est ainsi reliée à un tube d'alimentation qui est disposé sensiblement au centre de la conduite d'air.

La réserve de lubrifiant est agencée sous la conduite d'air.

Le document EP 0.448.690 décrit un dispositif de graissage de secours à utiliser en cas de défaillances d'un dispositif de graissage primaire.

Ce dispositif de graissage de secours comprend un réservoir à huile qui est rempli à partir du dispositif de graissage primaire. De plus, le dispositif de graissage de secours comprend un pulvérisateur d'huile dédié et une source d'air extérieure à la boîte de transmission de puissance. Cette source d'air peut comprendre de l'air purgé d'un moteur ou encore un compresseur d'air auxiliaire.

Le document US 4.717.000 décrit un système de lubrification d'urgence. Ce système de lubrification d'urgence comprend un réservoir de secours alimenté en temps normal par un système de lubrification primaire.

Le système de de lubrification d'urgence inclut une source d'air comprimé prenant la forme d'un compresseur d'un moteur extérieur à une boîte de transmission de puissance, une vanne sensible à la pression d'huile, et des brumisateurs dédiés à ce système de lubrification d'urgence.

Les documents EP0443901, US 2007/261922, US 5046306, FR 2826094, US 4976335, US 2014/090930 et WO 2011/059450 sont aussi connus.

La présente invention a alors pour objet de proposer un système alternatif tendant éventuellement à présenter un encombrement et/ou une masse limitée.

Selon l'invention, une boîte de transmission de puissance est munie d'au moins un système de lubrification, le système de lubrification comprenant une pompe de lubrification qui est agencée dans un bac contenant un liquide de lubrification, la pompe de lubrification étant en communication fluidique avec un circuit fluidique débouchant sur au moins un moyen de projection dirigé vers un espace interne d'un carter de ladite boîte de transmission de puissance, le liquide de lubrification étant puisé dans le bac par la pompe de lubrification pour circuler dans le circuit fluidique et être projeté dans l'espace interne par chaque moyen de projection.

Par exemple, le bac est représenté par un fond du carter de la boîte de transmission de puissance. Un moyen de projection peut prendre la forme d'un gicleur voire même d'un orifice.

De plus, la boîte de transmission de puissance comporte un réservoir de secours apte à contenir un fluide de lubrification, le réservoir étant en communication fluidique avec le circuit fluidique, le réservoir de secours étant relié par au moins une conduite au circuit fluidique en amont de chaque moyen de projection, ledit fluide de lubrification étant déplacé dans le circuit fluidique vers chaque moyen de projection par un gaz qui est mis en mouvement par ladite pompe de lubrification en cas de fuite dudit liquide de lubrification.

L'invention propose donc d'adjoindre à un système de lubrification existant un réservoir de secours relié par au moins une conduite à un circuit fluidique. Un tel réservoir de secours peut être indépendant du bac contenant le liquide de lubrification et agencé en dehors du carter de la boîte de transmission de puissance.

La pompe de lubrification d'une boîte de transmission de puissance continue à fonctionner en l'absence de liquide de lubrification. La demanderesse a constaté que cette pompe de lubrification peut alors se transformer en un compresseur d'air dans cette configuration.

Dès lors, la pompe de lubrification met en mouvement un gaz tel que de l'air dans le circuit fluidique, et non plus le liquide de lubrification. Le réservoir de secours achemine en outre un fluide de lubrification dans le circuit fluidique. Un mélange de ce gaz et du fluide de lubrification est alors dirigé vers les moyens de projection. Ces moyens de projection projettent alors le fluide de lubrification, par exemple sous forme de brouillard.

L'invention va à l'encontre de préjugés en faisant fonctionner la pompe de lubrification à vide, à savoir en l'absence du liquide de lubrification pour lequel la pompe de lubrification est initialement agencée. La pompe de lubrification est alors transformée en un compresseur d'air.

De plus, le transfert du fluide de lubrification dans le circuit fluidique peut se faire avec un faible débit. Le gaz sous pression mis en mouvement par la pompe de lubrification est alors présent dans le circuit fluidique en plus grande quantité que le fluide de lubrification. Par suite, des moyens de projection de type gicleurs standards peuvent se transformer en brumisateurs.

Ce fonctionnement n'a rien d'évident. En l'absence du liquide de lubrification, la pompe de lubrification tend à s'échauffer. Néanmoins, la pompe de lubrification peut fonctionner durant un temps minimal. En effet, le brouillard huileux provoqué par le système de lubrification à partir du fluide de lubrification permet de refroidir les pièces en mouvement dans la boîte de transmission de puissance, et éventuellement la pompe de lubrification.

De plus, une pompe de lubrification prévue pour faire circuler un fluide a une influence limitée sur un gaz. Néanmoins, la demanderesse note qu'une faible mise en pression du gaz présent dans la boîte de transmission de puissance s'avère suffisante pour projeter le fluide de lubrification.

Dès lors et contrairement à certains états de la technique, l'invention ne nécessite pas l'utilisation d'une nouvelle source de pression, par exemple un compresseur d'un moteur. La propre pompe de lubrification d'un système de lubrification de la boîte de transmission de puissance est utilisée dans un mode de fonctionnement de secours pour projeter un fluide de lubrification de secours.

L'invention peut alors s'adapter relativement facilement sur un système de lubrification existant.

La boîte de transmission de puissance peut aussi comporter une ou plusieurs des caractéristiques qui suivent.

Ainsi, la boîte de transmission de puissance peut comporter deux systèmes de lubrification.

Chaque système de lubrification comporte alors par sécurité un réservoir de secours selon l'invention.

Par ailleurs, le réservoir de secours peut surplomber le circuit fluidique.

Dans cette configuration, le fluide de lubrification peut notamment s'échapper du réservoir de secours vers le circuit fluidique par gravité.

Cette configuration peut tendre à optimiser la formation d'un brouillard de lubrifiant avec le fluide de lubrification. En effet, le fluide de lubrification peut tomber sous la forme de gouttes qui « explosent » contre une paroi du circuit fluidique ce qui peut tendre à favoriser le mélange du fluide de lubrification avec le gaz mis en mouvement par la pompe de lubrification.

Par ailleurs, le réservoir de secours peut comporter un diviseur mobile partageant le réservoir en un volume pressurisé n'accueillant pas un fluide de lubrification et un volume accueillant le fluide de lubrification.

Le réservoir de secours dispose alors d'un volume pressurisé qui maintient le moyen de lubrification à une pression prédéterminée.

Par ailleurs, en l'absence de fuite du liquide de lubrification, la pompe de lubrification peut pressuriser le liquide de lubrification à une pression supérieure ou égale à 1,5 bar, cette pompe de lubrification entraînant ledit gaz dans le circuit fluidique à une pression de 1,05 bar suite à une fuite du liquide de lubrification.

Une telle pompe de lubrification peut ainsi permettre la circulation du liquide de lubrification dans des conditions normales de fonctionnement, et d'un gaz en cas de fuite du liquide de lubrification.

En outre, le réservoir de secours peut être relié au circuit fluidique par au moins une conduite dite « conduite de sortie » qui débouche sur un tuyau du circuit fluidique.

Cette conduite de sortie dirige le fluide de lubrification vers le circuit fluidique, le cas échéant sous l'effet de la gravité.

La conduite de sortie peut être dimensionnée de manière à générer un écoulement du fluide de lubrification sous forme de gouttes. Par exemple, la conduite de sortie comporte une restriction pour notamment permettre l'écoulement du fluide de lubrification sous une forme de goutte à goutte.

Eventuellement, au moins une conduite de sortie comporte une extrémité munie d'un convergent qui est agencé au sein d'un tuyau du circuit fluidique.

Ce fluide de lubrification s'échappe alors de la conduite de sortie par un effet venturi. Pour favoriser cet échappement, le convergent peut être agencé au milieu du tuyau du circuit fluidique.

Selon un premier mode de réalisation, le réservoir de secours est rempli par le circuit fluidique en l'absence de fuite du liquide de lubrification, la partie du liquide de lubrification qui remplit le réservoir de secours représentant le fluide de lubrification.

Le réservoir de secours représente une zone de rétention retenant uniquement une partie du liquide de lubrification. Le système de lubrification s'avère alors simple.

Lors de la mise en route de la boîte de transmission de puissance, le liquide de lubrification remplit le réservoir de secours.

Le liquide de lubrification est alors évacué du réservoir de secours en cas de fuite du système de lubrification, ou encore à l'arrêt de la boîte de transmission de puissance par gravité. Eventuellement, le liquide de lubrification s'échappe en permanence du réservoir de secours, bien qu'étant utile uniquement en cas de fuite.

Selon une option, une seule conduite permet de remplir le réservoir de secours en l'absence de fuite, et de vider le réservoir de secours en présence d'une fuite.

De manière alternative, le réservoir de secours est relié au circuit fluidique par au moins une conduite dite « conduite d'entrée », ladite conduite d'entrée étant une liaison unidirectionnelle permettant uniquement la circulation d'un fluide du circuit fluidique vers le réservoir de secours. La conduite d'entrée peut comporter un clapet antiretour pour permettre uniquement la circulation d'un fluide du circuit fluidique vers le réservoir de secours.

Une conduite d'entrée permet de remplir le réservoir de secours, et une conduite de sortie permet de le vider.

De plus et selon une variante, le réservoir de secours étant relié au circuit fluidique par une conduite dite « conduite d'entrée » pour être rempli par le circuit fluidique en l'absence de fuite du liquide de lubrification, ledit réservoir de secours étant relié au circuit fluidique par une conduite de sortie pour transférer un fluide de lubrification vers le circuit fluidique, ladite conduite de sortie présente un diamètre minimal inférieur à un diamètre minimal de la conduite d'entrée.

L'expression « diamètre minimal » fait référence au plus petit diamètre d'une conduite.

Cette configuration vise à obtenir une conduite de sortie à faible diamètre pour générer un écoulement du fluide de lubrification sous une forme de goutte à goutte et/ou pour favoriser le remplissage du réservoir de secours.

Selon un deuxième mode de réalisation, le réservoir de secours est uniquement relié au circuit fluidique par une conduite de sortie, le fluide de lubrification étant distinct du liquide de lubrification.

Selon ce deuxième mode de réalisation, le réservoir de secours est dédié à la lubrification de secours pour n'être utilisé qu'en cas de fuite.

Ce réservoir de secours est donc rempli par un opérateur.

Ce deuxième mode de réalisation présente l'avantage d'offrir la possibilité d'utiliser un fluide de lubrification différent du liquide de lubrification. Par exemple, le fluide de lubrification et le liquide de lubrification comprennent respectivement des huiles présentant des caractéristiques différentes. Ainsi, le fluide de lubrification peut être une huile plus adaptée à la brumisation et/ou plus efficace à haute température que le liquide de lubrification.

Par ailleurs, le réservoir de secours peut être relié au circuit fluidique par une conduite munie d'une vanne.

La vanne permet de mettre en communication fluidique le réservoir de secours et le circuit fluidique uniquement en cas de fuite.

Une telle vanne peut être contrôlée par une commande manoeuvrable par un pilote.

De manière alternative ou complémentaire, la vanne est reliée à au moins un capteur de pression mesurant une pression dans ledit circuit fluidique. La vanne s'ouvre alors lorsque les organes mobiles à lubrifier de la boîte de transmission de puissance sont en mouvement et lorsque la pression devient inférieure à un seuil de pression.

Par exemple, la vanne est à cet effet aussi reliée à un dispositif mesurant la vitesse de rotation d'un des ces organes mobiles, ou encore la vitesse de rotation d'un rotor entraîné par la boîte de transmission de puissance.

De manière alternative ou complémentaire, la vanne est reliée à au moins un capteur de température mesurant une température dans l'espace interne d'un carter de la boîte de transmission de puissance, ladite vanne s'ouvrant lorsque ladite température devient supérieure à un seuil de température.

Outre une boîte de transmission de puissance, l'invention vise un aéronef comportant une telle boîte de transmission de puissance.

L'invention et ses avantages apparaîtront avec plus de détails dans le cadre de la description qui suit avec des exemples de réalisations donnés à titre illustratif en référence aux figures annexées qui représentent :
- la figure 1, un schéma illustrant un aéronef selon l'invention, cet aéronef comprenant une boîte de transmission de puissance,
- la figure 2, un schéma présentant une conduite de sortie comprenant un convergent,
- les figures 3 à 5, des schémas explicitant le fonctionnement d'un système de lubrification comprenant un réservoir alimenté en fluide par le circuit fluidique du système de lubrification, et
- la figure 6, un schéma explicitant le fonctionnement d'un système de lubrification comprenant un réservoir comprenant sa propre réserve de fluide.

Les éléments présents dans plusieurs figures distinctes sont affectés d'une seule et même référence.

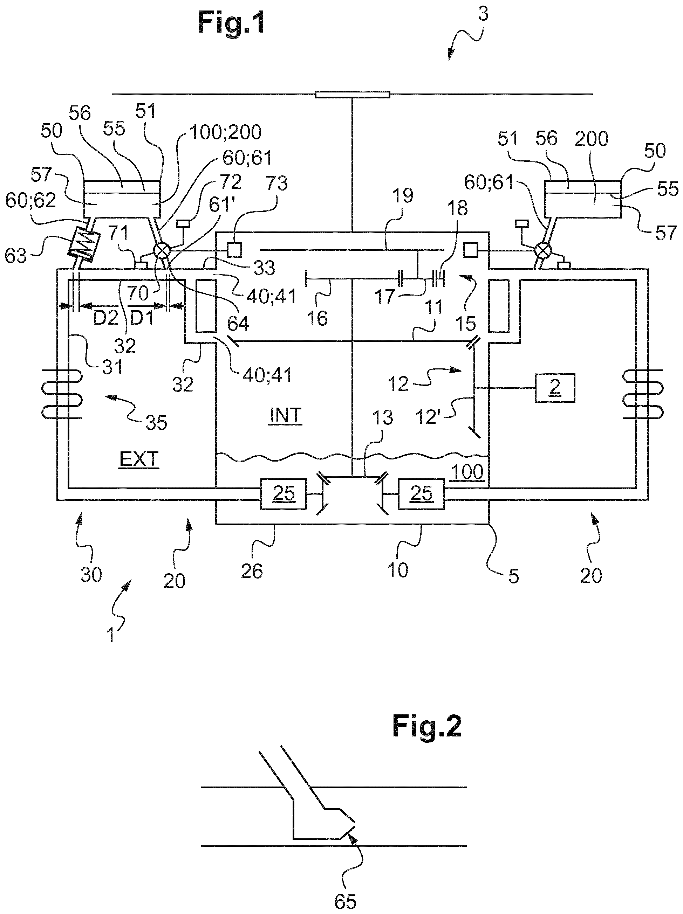

La figure 1 présente un aéronef 1 selon l'invention. Cet aéronef 1 comprend un rotor 3. Un tel rotor 3 peut être un rotor participant au moins partiellement à la sustentation et/ou à la propulsion de l'aéronef 1.

Pour mettre en mouvement le rotor 3, l'aéronef comporte au moins un moteur 2 et une boîte de transmission de puissance 5.

Dès lors, la boîte de transmission de puissance 5 comporte des organes de transmission tournants au sein d'un carter 10.

Ainsi, la boîte de transmission de puissance 5 comporte dans le carter 10 une roue d'entraînement 11 mettant en mouvement au moins un étage de réduction de vitesse 15. Par exemple, l'étage de réduction de vitesse 15 comporte une roue planétaire 16 solidarisée en rotation à la roue d'entraînement 11 par un arbre de transmission de puissance. Cette roue planétaire 16 engrène au moins une roue satellite 17 glissant le long d'une couronne périphérique 18. Chaque roue satellite 17 est en outre portée par un porte-satellite 19. Ce porte-satellite 19 peut être relié mécaniquement au rotor 3 à entraîner selon la figure 1, ou peut encore être relié à un autre étage de réduction de vitesse.

La roue d'entraînement 11 peut par ailleurs être entraînée indirectement en rotation autour d'un axe de rotation par chaque moteur. Ainsi, la boîte de transmission de puissance est pourvue d'un organe mécanique d'entrée 12 par moteur. Chaque organe mécanique d'entrée 12 est muni d'au moins une roue 12' qui engrène la roue d'entraînement 11.

Par ailleurs, la boîte de transmission de puissance 5 comporte au moins un système de lubrification 20 pour lubrifier les organes mobiles de cette boîte de transmission de puissance 5. Eventuellement, deux systèmes de lubrification 20 identiques ou différents équipent la boîte de transmission de puissance 5.

Chaque système de lubrification 20 comprend une pompe de lubrification 25. La pompe de lubrification 25 peut être mise en mouvement par une roue 13, cette roue 13 étant éventuellement solidaire en rotation de la roue d'entraînement 11.

Dès lors, cette pompe de lubrification 25 puise un liquide de lubrification 100 dans un bac 26 de la boîte de transmission de puissance. Classiquement, le liquide de lubrification peut comporter de l'huile. On se référera à la littérature pour obtenir des informations relatives aux liquides de lubrification.

Le bac 26 peut comporter le fond du carter 10 de la boîte de transmission de puissance 5. Ainsi, un liquide de lubrification injecté dans un espace interne INT du carter 10 tombe dans le bac 26 par gravité.

De plus, chaque système de lubrification 20 comprend un circuit fluidique 30 en communication fluidique avec la pompe de lubrification 25. La pompe de lubrification est ainsi dimensionnée pour faire circuler le liquide de lubrification dans le circuit fluidique 30.

Le circuit fluidique débouche sur au moins un moyen de projection 40 dirigé vers un espace interne INT d'un carter. Chaque moyen de projection 40 peut comprendre un moyen usuel, tel qu'un orifice 41 ou un gicleur non représenté par exemple.

Le circuit fluidique comporte au moins un tuyau 31, 32, 33. Le terme « tuyau » est à interpréter au sens large, un tuyau pouvant comporter plusieurs tuyauteries individuelles aboutées.

Le circuit fluidique peut être décomposé virtuellement en un tuyau amont 31 relié à la pompe de lubrification 25, un tuyau central 32 relié au tuyau amont 31, et un tuyau aval 33 par moyen de projection 40. Eventuellement, le tuyau amont 31 coopère avec un échangeur thermique 35.

En l'absence de fuite du liquide de lubrification telle qu'une fuite du bac 26, le liquide de lubrification 100 est puisé dans le bac 26 par la pompe de lubrification 25. Le liquide de lubrification circule alors dans le circuit fluidique 30 afin d'être finalement projeté dans l'espace interne INT par chaque moyen de projection 40.

Pour lubrifier cet espace interne suite à une fuite du liquide de lubrification 100, au moins un voire chaque système de lubrification 20 comporte de manière additionnelle un réservoir de secours 50.

Le réservoir de secours 50 d'un système de lubrification 20 est agencé en parallèle du circuit fluidique de ce système de lubrification 20.

Le réservoir de secours comporte une enveloppe 51 contenant un fluide de lubrification 200. Le fluide de lubrification 200 peut comporter de l'huile.

Le réservoir de secours 50 est indépendant du bac 26. Par suite, le réservoir de secours représente un contenant distinct du bac 26.

De plus, le réservoir de secours peut être agencé en dehors du carter 10 qui englobe les organes tournants de la boîte de transmission de puissance.

Ce réservoir de secours 50 est alors en communication fluidique avec le circuit fluidique 30 en amont des moyens de projection 40, à savoir par exemple en amont des tuyaux aval 33. Dès lors, le réservoir de secours peut être en communication fluidique avec le tuyau central 32.

A cet effet, le réservoir de secours 50 comporte au moins une conduite 60 s'étendant de l'enveloppe 51 vers le circuit fluidique 30.

La figure 1 présente deux réservoirs de secours 50 réalisés respectivement selon un premier mode de réalisation et un deuxième mode de réalisation.

Quel que soit le mode de réalisation, le réservoir de secours est ainsi relié par au moins une conduite dite conduite de sortie 61 au circuit fluidique.

Cette conduite de sortie permet notamment au fluide de lubrification 200 de rejoindre le circuit fluidique 30. Pour faciliter ce mouvement, un réservoir de secours 50 peut surplomber le circuit fluidique 30 correspondant pour permettre un écoulement par gravité du fluide de lubrification 200.

La conduite de sortie 61 débouche alors sur un tuyau du circuit fluidique, en particulier le tuyau central selon la figure 1.

Selon la variante de la figure 1, une conduite de sortie 61 comporte un orifice 61' débouchant sur le circuit fluidique. En outre, la conduite de sortie peut comporter une restriction 64 pour notamment favoriser un écoulement de type goutte à goutte.

Selon la variante de la figure 2, une conduite de sortie comporte une extrémité munie d'un convergent 65 qui est agencé dans le circuit fluidique. Par exemple, le convergent 65 est agencé au milieu d'un tuyau du circuit fluidique.

Par ailleurs et en référence à la figure 1, une conduite d'un réservoir de secours peut être munie d'une vanne 70.

En particulier, une conduite de sortie 61 peut comporter une telle vanne 70 pour permettre l'écoulement du fluide de lubrification uniquement dans des conditions prédéterminées.

Une vanne 70 peut être contrôlée par une commande 72 manoeuvrable par un pilote.

En outre, une vanne 70 peut être contrôlée en fonction d'une pression régnant dans le circuit fluidique. La vanne 70 est alors reliée à au moins un capteur de pression 71 mesurant une pression dans ce circuit fluidique 30. Ladite vanne 70 peut éventuellement s'ouvir lorsque la pression mesurée devient inférieure à un seuil de pression.

Une vanne 70 peut aussi être contrôlée par une température régnant dans l'espace interne INT d'une boîte de transmission de puissance. La vanne 70 est alors reliée à au moins un capteur de température 73 mesurant une température dans cet espace interne INT, ladite vanne s'ouvrant lorsque ladite température devient supérieure à un seuil de température.

Par ailleurs, un réservoir de secours peut comporter un diviseur 55. Un tel diviseur 55 présente par exemple un piston ou une membrane partageant le réservoir de secours 50 en un volume pressurisé 56 n'accueillant pas un fluide de lubrification 200 et un volume de lubrifiant 57 accueillant le fluide de lubrification 200. Le volume pressurisé 56 peut par exemple comprendre un gaz injecté par un opérateur à une pression prédéterminée.

La pression régnant dans le volume de lubrifiant 57 est inférieure à la pression du liquide de lubrification dans le circuit fluidique.

Selon un premier mode de réalisation illustré sur le système de lubrification 20 disposé à gauche de la figure 1, le réservoir de secours est rempli par le circuit fluidique 30.

En l'absence de fuite du liquide de lubrification, une partie de ce liquide de lubrification remplit le réservoir de secours. Le fluide de lubrification 200 représente donc une partie du liquide de lubrification 100.

La conduite de sortie peut permettre l'acheminement du liquide de lubrification vers le réservoir de secours selon une première alternative non représentée.

Néanmoins, selon la deuxième alternative illustrée sur la figure 1, le réservoir de secours comporte une conduite dite conduite d'entrée 62 pour pourvoir être rempli par le circuit fluidique.

La conduite d'entrée 62 est située en amont de la conduite de sortie 61. La conduite d'entrée s'étend en outre du circuit fluidique, et notamment du tuyau central 32, vers l'enveloppe 51 du réservoir de secours 50.

Cette conduite d'entrée 62 peut être une liaison unidirectionnelle permettant uniquement la circulation du liquide de lubrification du circuit fluidique 30 vers le réservoir de secours 50.

Par suite, la conduite d'entrée peut comporter un clapet antiretour 63.

En outre, la conduite d'entrée 62 et la conduite de sortie 61 peuvent présenter des dimensions différentes. La conduite de sortie 61 présente ainsi un diamètre minimal D1 qui est inférieur à un diamètre minimal D2 de la conduite d'entrée 62.

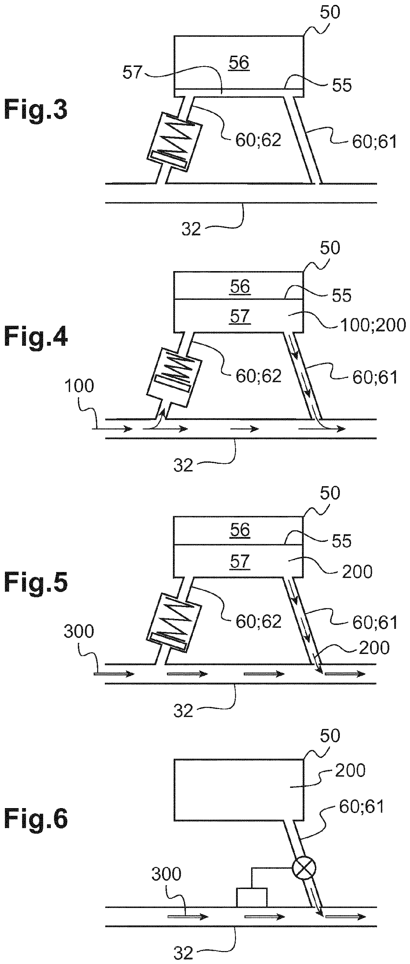

Le réservoir de secours selon le premier mode de réalisation représentée sur la figure 1 présente une vanne 70. Toutefois, une telle vanne est optionnelle et n'est en particulier pas représentée sur les figures 3 à 5.

Selon un deuxième mode de réalisation illustré sur le système de lubrification 20 disposé à droite de la figure 1, le réservoir de secours n'est pas rempli par le circuit fluidique 30.

Le réservoir de secours 50 est uniquement relié au circuit fluidique 30 par une conduite de sortie 61.

De plus, le fluide de lubrification 200 est distinct du liquide de lubrification 100. L'expression « est distinct du liquide de lubrification 100 » signifie que le fluide de lubrification n'est pas une partie du liquide de lubrification. Le fluide de lubrification est introduit dans le réservoir de secours 50 par un opérateur.

Néanmoins, le fluide de lubrification et le liquide de lubrification peuvent être des fluides différents ou identiques.

La conduite de sortie peut être munie d'une vanne du type décrite précédemment.

Indépendamment de la réalisation du réservoir de secours, le système de lubrification est dépourvu d'un compresseur extérieur à la boîte de transmission de puissance.

En effet, en cas de fuite du liquide de lubrification, le fluide de lubrification 200 contenu dans un réservoir de secours est déplacé dans le circuit fluidique 30 vers chaque moyen de projection 40 par un gaz. En cas de fuite du liquide de lubrification, le bac 26 est en effet rempli par un gaz, tel que de l'air. Ce gaz est alors mis en mouvement par la pompe de lubrification 25 dans le circuit fluidique et se mélange au fluide de lubrification, pour permettre la distribution du fluide de lubrification dans l'espace interne INT par les moyens de projection 40.

L'invention ne nécessite donc pas un compresseur d'air additionnel.

Les figures 3 à 5 illustrent le fonctionnement de l'invention avec un réservoir de secours réalisé selon le premier mode de réalisation.

En référence à la figure 3, le réservoir de secours est vide avant le démarrage de la boîte de transmission de puissance.

En référence à la figure 4, lorsque la boîte de transmission de puissance est mise en mouvement par au moins un moteur, la pompe de lubrification fonctionne.

Cette pompe de lubrification induit la circulation du liquide de lubrification 100 dans le circuit fluidique 30. La pompe de lubrification peut alors pressuriser le liquide de lubrification 100 dans le circuit fluidique à une pression supérieure ou égale à 1.5 bar, un bar étant égal à 101300 Pascals.

Lorsque le liquide de lubrification 100 atteint le tuyau central 32, une partie de ce liquide de lubrification 100 traverse la conduite d'entrée 62 pour atteindre le réservoir de secours 50.

La conduite de sortie 61 ayant un diamètre minimal inférieur au diamètre minimal de la conduite d'entrée 62, une partie du liquide de lubrification demeure dans le réservoir de secours pour constituer une réserve de fluide de lubrification 200. Eventuellement, une vanne peut être agencée sur la conduite de sortie pour permettre de remplir le réservoir de secours.

Le niveau du fluide de lubrification s'élève donc dans le réservoir de secours. Ainsi, le réservoir de secours se remplit passivement.

Le cas échéant, un diviseur 55 permet de définir un volume pressurisé de gaz 56 dans le réservoir de secours afin de maintenir le fluide de lubrification à une pression prédéterminée. Par exemple, le fluide de lubrification est maintenu à une pression comprise entre 1,1 et 1,5 bar.

Eventuellement, une partie du fluide de lubrification s'écoule dans le circuit fluidique, sans influence sur le fonctionnement de ce circuit fluidique.

Lorsque la boîte de transmission de puissance est mise à l'arrêt, le fluide de lubrification s'écoule par gravité dans le circuit fluidique, le réservoir de secours retournant dans l'état représenté dans la figure 3.

En cas de fuite du liquide de refroidissement et en référence à la figure 3, la pompe de lubrification fait circuler un gaz 300 dans le circuit fluidique. Ce gaz présente une pression inférieure à 1.5 bar. En particulier, la pression du gaz est inférieure à la pression régnant dans le volume pressurisé, en atteignant par exemple une pression de l'ordre de 1.05 bar.

Selon la variante de la figure 5, le fluide de lubrification s'écoule par gravité dans la conduite de sortie 61, puis s'écoule sous la forme d'un goutte à goutte dans le circuit fluidique.

Selon la variante de la figure 2, le fluide de lubrification s'échappe du convergent 65 par effet venturi.

Le mélange de gaz et de fluide de lubrification est alors dirigé vers les moyens de projection qui provoquent la brumisation du fluide de lubrification à l'intérieur du carter de la boîte de transmission de puissance.

Selon le deuxième mode de réalisation de la figure 6, en présence d'une fuite du liquide de lubrification, la pompe de lubrification fait circuler un gaz 300 dans le circuit fluidique.

De plus, la vanne 70 s'ouvre. Le fluide de lubrification s'écoule alors par gravité dans la conduite de sortie 61 pour être mélangé au gaz 300.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Boîte de transmission de puissance (5) munie d'au moins un système de lubrification (20), ledit système de lubrification (20) comprenant une pompe de lubrification (25) qui est agencée dans un bac (26) contenant un liquide de lubrification (100), ladite pompe de lubrification (25) étant en communication fluidique avec un circuit fluidique (30) débouchant sur au moins un moyen de projection (40) dirigé vers un espace interne (INT) d'un carter (10) de ladite boîte de transmission de puissance (5), ledit liquide de lubrification (100) étant puisé dans ledit bac (26) par ladite pompe de lubrification (25) pour circuler dans ledit circuit fluidique (30) et être projeté dans ledit espace interne (INT) par chaque moyen de projection (40), ladite boîte de transmission de puissance (5) comporte un réservoir de secours (50) apte à contenir un fluide de lubrification (200), ledit réservoir de secours (50) étant en communication fluidique avec ledit circuit fluidique (30), ledit réservoir de secours (50) étant relié par au moins une conduite (60) au circuit fluidique (30) en amont de chaque moyen de projection (40),
**caractérisée en ce que** ledit fluide de lubrification (200) est déplacé dans le circuit fluidique (30) vers chaque moyen de projection (40) par un gaz (300) qui est mis en mouvement par ladite pompe de lubrification (25) en cas de fuite dudit liquide de lubrification (100).

2. Boîte de transmission de puissance selon la revendication 1,
**caractérisée en ce que** ladite boîte de transmission de puissance (5) comporte deux systèmes de lubrification (20).

3. Boîte de transmission de puissance selon l'une quelconque des revendications 1 à 2,
**caractérisée en ce que** ledit réservoir de secours (50) surplombe ledit circuit fluidique (30).

4. Boîte de transmission de puissance selon l'une quelconque des revendications 1 à 3,
**caractérisée en ce que** ledit réservoir de secours (50) comporte un diviseur (55) mobile partageant ledit réservoir de secours (50) en un volume pressurisé (56) n'accueillant pas un fluide de lubrification (200) et un volume accueillant ledit fluide de lubrification (200).

5. Boîte de transmission de puissance selon l'une quelconque des revendications 1 à 4,
**caractérisée en ce qu'**en l'absence de fuite du liquide de lubrification (100), ladite pompe de lubrification (25) pressurise le liquide de lubrification à une pression supérieure ou égale à 1,5 bar, ladite pompe de lubrification (25) entraînant ledit gaz dans ledit circuit fluidique (30) à une pression de 1,05 bar suite à une fuite du liquide de lubrification (100).

6. Boîte de transmission de puissance selon l'une quelconque des revendications 1 à 5,
**caractérisée en ce que** ledit réservoir de secours (50) est relié au circuit fluidique (30) par au moins une conduite dite « conduite de sortie (61) » qui débouche sur un tuyau (32) du circuit fluidique (30).

7. Boîte de transmission de puissance selon l'une quelconque des revendications 1 à 6,
**caractérisée en ce que** ledit réservoir de secours (50) est relié au circuit fluidique (30) par au moins une conduite dite « conduite de sortie (61) », ladite conduite de sortie (61) comportant une extrémité munie d'un convergent (65) qui est agencé au sein d'un tuyau (32) du circuit fluidique (30).

8. Boîte de transmission de puissance selon l'une quelconque des revendications 1 à 7,
**caractérisée en ce que** ledit réservoir de secours (50) est rempli par ledit circuit fluidique (30) en l'absence de fuite dudit liquide de lubrification, la partie du liquide de lubrification qui remplit ledit réservoir de secours (50) représentant ledit fluide de lubrification (200).

9. Boîte de transmission de puissance selon la revendication 8,
**caractérisée en ce que** ledit réservoir de secours (50) est relié au circuit fluidique (30) par au moins une conduite dite « conduite d'entrée (62) », ladite conduite d'entrée (62) étant une liaison unidirectionnelle permettant uniquement la circulation d'un fluide du circuit fluidique (30) vers le réservoir de secours (50).

10. Boîte de transmission de puissance selon l'une quelconque des revendications 1 à 9,
**caractérisée en ce que** ledit réservoir de secours (50) étant relié au circuit fluidique (30) par une conduite dite « conduite d'entrée (62) » pour être rempli par le circuit fluidique (30) en l'absence de fuite du liquide de lubrification (100), ledit réservoir de secours (50) étant relié au circuit fluidique (30) par une conduite de sortie (61) pour transférer un fluide de lubrification (200) vers le circuit fluidique (30), ladite conduite de sortie (61) présente un diamètre minimal (D1) inférieur à un diamètre minimal (D2) de la conduite d'entrée (62).

11. Boîte de transmission de puissance selon la revendication 7,
**caractérisée en ce que** ledit réservoir de secours (50) est uniquement relié au circuit fluidique (30) par une conduite de sortie (61), le fluide de lubrification (200) étant distinct du liquide de lubrification (100).

12. Boîte de transmission de puissance selon l'une quelconque des revendications 1 à 11,
**caractérisée en ce que** ledit réservoir de secours (50) est relié au circuit fluidique (30) par une conduite munie d'une vanne (70).

13. Boîte de transmission de puissance selon la revendication 12, **caractérisée en ce que** ladite vanne (70) est contrôlée par une commande (72) manoeuvrable par un pilote.

14. Boîte de transmission de puissance selon l'une quelconque des revendications 12 à 13,
**caractérisée en ce que** ladite vanne (70) est reliée à au moins un capteur de pression (71) mesurant une pression dans ledit circuit fluidique (30).

15. Boîte de transmission de puissance selon l'une quelconque des revendications 12 à 14,
**caractérisée en ce que** ladite vanne (70) est reliée à au moins un capteur de température (73) mesurant une température dans ledit espace interne (INT), ladite vanne s'ouvrant lorsque ladite température devient supérieure à un seuil de température.

16. Boîte de transmission de puissance selon l'une quelconque des revendications 1 à 15,
**caractérisée en ce que** ledit réservoir de secours (50) est indépendant dudit bac (26) et agencé en dehors dudit carter (10).

17. Aéronef (1),
**caractérisé en ce que** ledit aéronef (1) comporte une boîte de transmission de puissance (5) selon l'une quelconque des revendications 1 à 16.

## Patentansprüche

1. Leistungsübertragungsgetriebe (5) mit mindestens einem Schmiersystem (20), wobei das Schmiersystem (20) eine Schmierpumpe (25) umfasst, die in einem Behälter (26) angeordnet ist, der eine Schmierflüssigkeit (100) enthält, die Schmierpumpe (25) in Fluidverbindung mit einem Fluidkreislauf (30) steht, der zu mindestens einer Ausstoßvorrichtung (40) führt, die auf einen Innenraum (INT) eines Gehäuses (10) des Leistungsübertragungsgetriebes (5) gerichtet ist, die Schmierflüssigkeit (100) aus dem Behälter (26) durch die Schmierpumpe (25) angesaugt wird, um in dem Fluidkreislauf (30) zu zirkulieren und durch jede Ausstoßvorrichtung (40) in den Innenraum (INT) ausgestoßen zu werden, das Leistungsübertragungsgetriebe (5) einen Sicherungsspeicher (50) aufweist, der geeignet ist, ein Schmierfluid (200) aufzunehmen, wobei der Sicherungsspeicher (50) in Fluidverbindung mit dem Fluidkreislauf (30) steht, der Sicherungsspeicher (50) durch mindestens eine Leitung (60) mit dem Fluidkreislauf (30) stromaufwärts von jeder Ausstoßvorrichtung (40) verbunden ist,
**dadurch gekennzeichnet, dass** das Schmierfluid (200) im Fluidkreislauf (30) zu jeder Ausstoßvorrichtung (40) durch ein Gas (300) bewegt wird, das von der Schmierpumpe (25) im Falle eines Austritts der Schmierflüssigkeit (100) in Bewegung gesetzt wird.

2. Leistungsübertragungsgetriebe nach Anspruch 1,
**dadurch gekennzeichnet, dass** das Leistungsübertragungsgetriebe (5) zwei Schmiersysteme (20) aufweist.

3. Leistungsübertragungsgetriebe nach einem der Ansprüche 1 bis 2,
**dadurch gekennzeichnet, dass** der Sicherungsspeicher (50) über dem Fluidkreislauf (30) angeordnet ist.

4. Leistungsübertragungsgetriebe nach einem der Ansprüche 1 bis 3,
**dadurch gekennzeichnet, dass** der Sicherungsspeicher (50) einen beweglichen Teiler (55) aufweist, der den Sicherungsspeicher (50) in ein druckbeaufschlagtes Volumen (56), das kein Schmiermittel (200) aufnimmt, und ein das Schmiermittel (200) aufnehmendes Volumen unterteilt.

5. Leistungsübertragungsgetriebe nach einem der Ansprüche 1 bis 4,
**dadurch gekennzeichnet, dass** die Schmierpumpe (25) die Schmierflüssigkeit mit einem Druck von mehr als oder gleich 1,5 bar druckbeaufschlagt, und dass die Schmierpumpe (25) nach einem Austritt der Schmierflüssigkeit (100) das Gas in dem Fluidkreislauf (30) bei einem Druck von 1,05 bar antreibt.

6. Leistungsübertragungsgetriebe nach einem der Ansprüche 1 bis 5,
**dadurch gekennzeichnet, dass** der Sicherungsspeicher (50) mit dem Fluidkreislauf (30) durch mindestens eine als Auslassleitung (61) bezeichnete Leitung verbunden ist, die in ein Rohr (32) des Fluidkreislaufs (30) mündet.

7. Leistungsübertragungsgetriebe nach einem der Ansprüche 1 bis 6,
**dadurch gekennzeichnet, dass** der Sicherungsspeicher (50) mit dem Fluidkreislauf (30) durch mindestens ein als Auslassrohr (61) bezeichnetes Rohr verbunden ist, wobei das Auslassrohr (61) ein Ende aufweist, das mit einer Verengung (65) versehen ist, die innerhalb eines Rohrs (32) des Fluidkreislaufs (30) angeordnet ist.

8. Leistungsübertragungsgetriebe nach einem der Ansprüche 1 bis 7,
**dadurch gekennzeichnet, dass** der Sicherungsspeicher (50) in Abwesenheit eines Austritts der Schmierflüssigkeit durch den Fluidkreislauf (30) gefüllt wird, wobei der Teil der Schmierflüssigkeit, der den Sicherungsspeicher (50) füllt, das Schmierfluid (200) darstellt.

9. Leistungsübertragungsgetriebe nach Anspruch 8,
**dadurch gekennzeichnet, dass** der Sicherungsspeicher (50) mit dem Fluidkreislauf (30) durch mindestens ein als Einlassrohr (62) bezeichnetes Rohr verbunden ist, wobei das Einlassrohr (62) eine unidirektionale Verbindung ist, die nur den Fluss eines Fluids aus dem Fluidkreislauf (30) zum Sicherungsspeicher (50) ermöglicht.

10. Leistungsübertragungsgetriebe nach einem der Ansprüche 1 bis 9,
**dadurch gekennzeichnet, dass** der Sicherungsspeicher (50) mit dem Fluidkreislauf (30) durch eine als Einlassleitung (62) bezeichnete Leitung verbunden ist, um in Abwesenheit eines Austritts der Schmierflüssigkeit (100) vom Fluidkreislauf (30) gefüllt zu werden, dass der Sicherungsspeicher (50) mit dem Fluidkreislauf (30) durch eine Auslassleitung (61) zum Übertragen eines Schmierfluids (200) auf den Fluidkreislauf (30) verbunden ist, und dass die Auslassleitung (61) einen Mindestdurchmesser (D1) aufweist, der kleiner ist als ein Mindestdurchmesser (D2) der Einlassleitung (62).

11. Leistungsübertragungsgetriebe nach Anspruch 7,
**dadurch gekennzeichnet, dass** der Sicherungsspeicher (50) mit dem Fluidkreislauf (30) nur über eine Auslassleitung (61) verbunden ist, und dass das Schmierfluid (200) von der Schmierflüssigkeit (100) getrennt ist.

12. Leistungsübertragungsgetriebe nach einem der Ansprüche 1 bis 11,
**dadurch gekennzeichnet, dass** der Sicherungsspeicher (50) mit dem Fluidkreislauf (30) über eine Leitung verbunden ist, die mit einem Ventil (70) versehen ist.

13. Leistungsübertragungsgetriebe nach Anspruch 12,
**dadurch gekennzeichnet, dass** das Ventil (70) durch eine durch einen Piloten bedienbare Steuerung (72) gesteuert ist.

14. Leistungsübertragungsgetriebe nach einem der Ansprüche 12 bis 13,
**dadurch gekennzeichnet, dass** das Ventil (70) mit mindestens einem Drucksensor (71) verbunden ist, der einen Druck in dem Fluidkreislauf (30) misst.

15. Leistungsübertragungsgetriebe nach einem der Ansprüche 12 bis 14,
**dadurch gekennzeichnet, dass** das Ventil (70) mit mindestens einem Temperatursensor (73) verbunden ist, der eine Temperatur in dem Innenraum (INT) misst, wobei sich das Ventil öffnet, wenn die Temperatur über einem Temperaturschwellenwert liegt.

16. Leistungsübertragungsgetriebe nach einem der Ansprüche 1 bis 15,
**dadurch gekennzeichnet, dass** der Sicherungsspeicher (50) unabhängig vom Behälter (26) und außerhalb des Gehäuses (10) angeordnet ist.

17. Luftfahrzeug (1),
**dadurch gekennzeichnet, dass** das Luftfahrzeug (1) ein Leistungsübertragungsgetriebe (5) nach einem der Ansprüche 1 bis 16 aufweist.

## Claims

1. Power transmission gearbox (5) provided with at least one lubrication system (20), said lubrication system (20) including a lubrication pump (25) which is arranged in a sump (26) that contains a lubricating liquid (100), said lubrication pump (25) being in fluid communication with a fluid circuit (30) leading to at least one spraying means (40) directed towards an inner space (INT) of a housing (10) of said power transmission gearbox (5), said lubricating liquid (100) being drawn into said sump (26) by said lubrication pump (25) in order to flow in said fluid circuit (30) and to be sprayed into said inner space (INT) by each spraying means (40), said power transmission gearbox (5) comprising an emergency reservoir (50) suitable for containing a lubricating fluid (200), said emergency reservoir (50) being in fluid communication with said fluid circuit (30), said emergency reservoir (50) being connected by at least one pipe (60) to the fluid circuit (30) upstream of each spraying means (40),
**characterised in that** said lubricating fluid (200) is moved in the fluid circuit (30) to each spraying means (40) by a gas (300) which is set in motion by said lubrication pump (25) in the case of leakage of said lubricating liquid (100).

2. Power transmission gearbox according to claim 1,
**characterised in that** said power transmission gearbox (5) comprises two lubrication systems (20).

3. Power transmission gearbox according to either claim 1 or claim 2,
**characterised in that** said emergency reservoir (50) is located above said fluid circuit (30).

4. Power transmission gearbox according to any of claims 1 to 3,
**characterised in that** said emergency reservoir (50) comprises a movable divider (55) that separates said emergency reservoir (50) into a pressurised volume (56) that does not receive a lubricating fluid (200) and a volume that receives said lubricating fluid (200).

5. Power transmission gearbox according to any of claims 1 to 4,
**characterised in that**, in the absence of leakage of the lubricating liquid (100), said lubrication pump (25) pressurises the lubricating liquid to a pressure greater than or equal to 1.5 bar, said lubrication pump (25) driving said gas in said fluid circuit (30) at a pressure of 1.05 bar following a leakage of the lubricating liquid (100).

6. Power transmission gearbox according to any of claims 1 to 5,
**characterised in that** said emergency reservoir (50) is connected to the fluid circuit (30) by at least one pipe referred to as an "outlet pipe (61)", which leads to a duct (32) of the fluid circuit (30).

7. Power transmission gearbox according to any of claims 1 to 6,
**characterised in that** said emergency reservoir (50) is connected to the fluid circuit (30) by at least one pipe referred to as an "outlet pipe (61)", said outlet pipe (61) having an end provided with a converging region (65) which is arranged within a duct (32) of the fluid circuit (30).

8. Power transmission gearbox according to any of claims 1 to 7,
**characterised in that** said emergency reservoir (50) is filled by said fluid circuit (30) in the absence of leakage of said lubricating liquid, the portion of the lubricating liquid which fills said emergency reservoir (50) representing said lubricating fluid (200).

9. Power transmission gearbox according to claim 8,
**characterised in that** said emergency reservoir (50) is connected to the fluid circuit (30) by at least one pipe referred to as an "inlet pipe (62)", said inlet pipe (62) being a unidirectional link allowing only the flow of a fluid from the fluid circuit (30) to the emergency reservoir (50).

10. Power transmission gearbox according to any of claims 1 to 9,
**characterised in that**, said emergency reservoir (50) being connected to the fluid circuit (30) by a pipe referred to as an "inlet pipe (62)" in order to be filled by the fluid circuit (30) in the absence of leakage of the lubricating liquid (100), said emergency reservoir (50) being connected to the fluid circuit (30) by an outlet pipe (61) in order to transfer a lubricating fluid (200) to the fluid circuit (30), said outlet pipe (61) has a minimum diameter (D1) that is smaller than a minimum diameter (D2) of the inlet pipe (62).

11. Power transmission gearbox according to claim 7,
**characterised in that** said emergency reservoir (50) is only connected to the fluid circuit (30) by an outlet pipe (61), the lubricating fluid (200) being distinct from the lubricating liquid (100).

12. Power transmission gearbox according to any of claims 1 to 11,
**characterised in that** said emergency reservoir (50) is connected to the fluid circuit (30) by a pipe provided with a valve (70).

13. Power transmission gearbox according to claim 12,
**characterised in that** said valve (70) is controlled by a control element (72) that can be manipulated by a pilot.

14. Power transmission gearbox according to either claim 12 or claim 13,
**characterised in that** said valve (70) is connected to at least one pressure sensor (71) that measures a pressure in said fluid circuit (30).

15. Power transmission gearbox according to any of claims 12 to 14,
**characterised in that** said valve (70) is connected to at least one temperature sensor (73) that measures a temperature in said inner space (INT), said valve opening when said temperature becomes greater than a temperature threshold.

16. Power transmission gearbox according to any of claims 1 to 15,
**characterised in that** said emergency reservoir (50) is independent of said sump (26) and arranged outside said housing (10).

17. Aircraft (1),
**characterised in that** said aircraft (1) comprises a power transmission gearbox (5) according to any of claims 1 to 16.
